# EUROPEAN PATENT SPECIFICATION

(11) **EP 3 483 479 B1**
(45) Date of publication and mention of the grant of the patent: **18.05.2022**
(21) Application number: 17382768.4
(22) Date of filing: 13.11.2017
(51) Int. Cl.: F16H 59/10, F16H 59/02

(54) **SHIFTER ASSEMBLY**
SCHALTHEBELVORRICHTUNG
ENSEMBLE DE SÉLECTEUR DE VITESSES

(43) Date of publication of application: 15.05.2019
(73) Proprietor: Fico Triad, S.A., 08028 Barcelona (ES)
(72) Inventor: Moreno Colom, Javier, 08232 VILADECAVALLS (ES); Cot Padró, Marçal, 08232 VILADECAVALLS (ES); Ferrer Ribas, Óscar, 08232 VILADECAVALLS (ES)
(74) Representative: ZBM Patents - Zea, Barlocci & Markvardsen

(56) References cited:
- EP-A1- 3 187 754
- ES-T3- 2 379 682
- KR-B1- 101 341 128
- US-A1- 2012 025 810
- US-A1- 2017 284 536

## Description

The present invention relates to shifter assemblies for controlling a vehicle transmission, and more particularly to shifter assemblies of the shift-by-wire or automatic type in which the shifter lever can be actuated according to different movements to perform different operations for controlling a vehicle transmission in different modes of operation.

### BACKGROUND

Shifter assemblies adapted to allow selection of different modes of operation of the vehicle transmission are known in the art. Said shifter assemblies include a shifter lever for controlling a vehicle transmission according to said different modes of operation of the transmission and also for selecting between said different modes of operation. A first mode of operation may be for example a manual mode for controlling the transmission in which gear positions are manually changed by a driver. A second mode of operation may be an automatic mode for controlling the transmission in which gear positions are changed automatically according to vehicle speed when a driver selects a drive mode.

Known shifter assemblies include means for detecting the position of the shifter lever are also known in the art which may be provided in the shifter assembly. The shifter lever position detecting means usually comprise hall sensors and magnets arranged to detect a gear position that has been selected by the user. In this way, a particular position of the shifter lever can be identified using an electrical signal that is detected by the hall sensors. Attempts have been made to also provide said shifter lever position detecting means in the above mentioned shifter assemblies with different modes of operation in which the shifter lever moves in different paths. For example, US2004035237 provides a shifting device in which the shifter lever can be moved at least along a first axis and a second axis to select shift positions and means for detecting the position of the shift lever. The detecting means comprises a magnet that can be moved in a vertical direction by the shifter lever and a magnetic sensor comprising hall sensors arranged along the vertical direction facing the magnet.

Such shifter assembly involves direct contact between a case containing the magnet and the shifter lever which result in friction and wear such that efficiency and accuracy may become adversely affected over time and with modes of shift positions possibly incorrectly selected in operation. KR101341128 discloses lever assembly for a vehicle electronic automatic transmission. The lever assembly comprises a base bracket, a rod, a detent pin elastically movable up and down by the rod, a groove member through which the detent pin is guided according to the operation of the rod, a bearing spindle surrounding the rod, and a magnet. The magnet is movable in a first direction and in a second direction in association with the rod. When the rod is operated in a select direction, the magnet is rotated relative to a sensor, whose movement is detected by the sensor.

US2012025810 provides a gearshift lever having a ball-and-socket joint that includes a magnet movable with it according to two directions on an orbit around a Hall sensor. The movement of the magnet is detected by the Hall sensor installed at a distance therefrom.

ES2379682 discloses a device for detecting the position of an automobile gearbox control lever comprising a Hall sensor and a magnet mounted on a shift lever ball joint facing the Hall sensor. The magnet can be pivoted according to the shift lever ball joint and the Hall sensor is thus capable of detecting movements and positions of the control lever.

EP3187754 discloses a shifter lever position detecting device for motor vehicles for shifter levers rotatably movable around a pivot axis and translationally moveable in a direction perpendicular to the pivot axis. The device comprises a 2D magnetic sensor, and a dual magnet coupled to the shifter lever at the pivot point and disposed proximate the 2D magnetic sensor and including first and second magnets having first and second pole pairs, respectively, offset from each other.

US2017284536, on which the two-part form of claim 1 is based, discloses a shift device having a detection shaft having a magnet attached thereto to be driven in first and second operation directions in response to corresponding movements of an operating lever. A movement of the detection shaft in each direction causes a shift position of the operating lever in the direction to be detected. The device also has magnetic sensors that detect a change in magnetic flux of the magnet to detect the shift position of the operating lever in said operation directions. An actuating shaft is attached to the lever one free end of which is loosely disposed between shaft receiving members projecting from the detection shaft. Rotation of the lever causes rotation of said actuating shaft resulting in the shaft receiving members to rotate causing the magnet to move.

### SUMMARY

A solution to the above problems is herein provided consisting of a shifter assembly for controlling a vehicle transmission according to claim 1. Preferred embodiments are laid down in the dependent claims.

With the shifter assembly according to the invention, a single magnetic sensor is used to detect both axial displacement and rotational movements, i.e. airgap and rotation angle, of the moving magnet. It is important to note that axial displacement and rotational movements of the magnet are detected independently of one another. With the present shifter assembly, there is no need for additional magnets to detect changes in the airgap between the magnet and the magnetic sensor and the rotational movement of the magnet during use.

An integrated assembly is thus achieved that is capable to perform a centralized continuous detection of axial displacement and rotational movements of the shifter lever through the use of a single sensor and a single magnet. A wide range of shifter lever detection can be obtained.

Additional objects, advantages and features of examples of the present invention will become apparent to those skilled in the art upon examination of the description, or may be learned by practice thereof.

### BRIEF DESCRIPTION OF THE DRAWINGS

Particular embodiments of the present invention will be described in the following by way of non-limiting examples, with reference to the appended drawings, in which:
Figure 1 is a general perspective view of a first example of the present shifter assembly according to the invention showing the shifter lever in different positions according to a first movement to perform shift operations;
Figure 2 is a general perspective view of the first example of the shifter assembly in figure 1 showing the shifter lever in one position according to a second movement to perform select operations to change between at least two different modes of operation;
Figure 3 is a general perspective view of a second example of the present shifter assembly according to the invention showing the shifter lever in one position according to a first movement to perform shift operations; and
Figure 4 is a general perspective view of the example of the shifter assembly in figure 3 showing the shifter lever in one position according to a second movement to perform select operations to change between at least two different modes of operation.

### DETAILED DESCRIPTION OF EXAMPLES

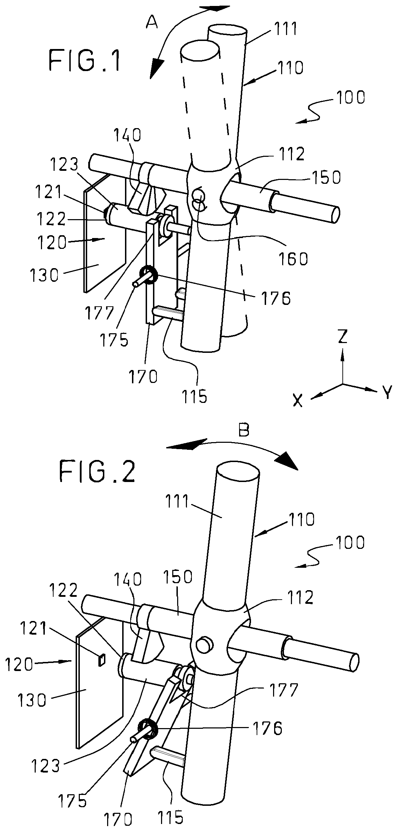

The figures 1-4 show two examples of the present shifter assembly 100 according to the present invention. The shifter assembly 100 in figures 1-4 is of the shift-by-wire or automatic type and is intended for controlling a vehicle transmission according to two different modes of operation as it will be described below.

The shifter assembly 100 comprises a shifter lever 110 that is pivotally mounted to a fixed base. The fixed base, not shown in the drawings, may be a housing fixed to a vehicle body suitable for receiving therein a lower end of the shifter lever 110.

The shifter lever 110 comprises a main shaft 111 having an upper end that is adapted to receive a knob, not shown in the drawings, and a lower end that is received inside the fixed base as stated above. The shifter lever 110 further comprises a partially spherical portion 112, as shown in the figures of the drawings, that is formed at one joint section of the main shaft 111. Other configurations are of course possible, such as for example cross joint, ball joint, combined ball-cross joint, etc. In the joint section of the main shaft 111 a shift shaft 150 and a select shaft 160 are attached to or formed integral with the shifter lever 110. The shift shaft 150 and the select shaft 160 are arranged at right angles to each other and coupled to a socket member, not shown, formed in the interior of the fixed base.

In this way, the shifter lever 110 can be moved in three-dimensional space according to two degrees of freedom, that is, the shifter lever 110 is allowed to be moved according to two different movements, defined by arrows A and B in the drawings, to perform different operations for controlling a vehicle transmission, as it will be described further below.

Specifically, the shifter lever 110 is capable of performing gear selection in two modes of operation in the example shown. In the both examples of the figures, the first mode of operation corresponds to a manual mode of operation for controlling the vehicle transmission in which gear positions are manually changed by a driver, and the second mode of operation is an automatic mode of operation for controlling the vehicle transmission automatically according to vehicle speed when a driver selects a drive mode.

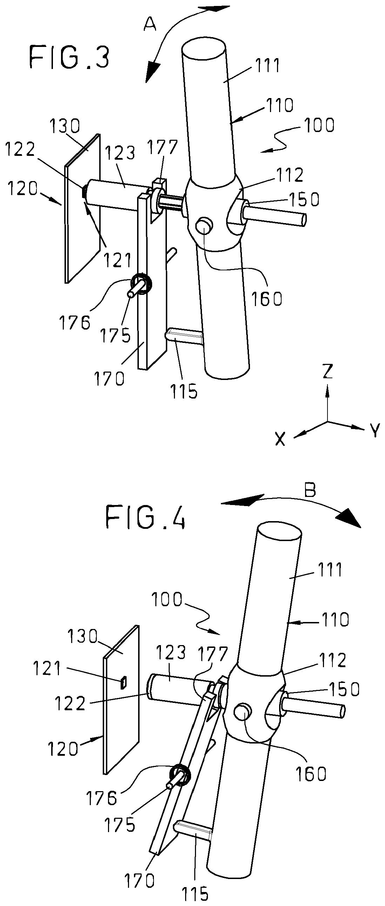

The above mentioned two different movements of the shifter lever 100, defined by arrows A and B in the drawings, relative to the housing are as follows. The shifter lever 100 can be actuated according to a first movement, defined by arrow A, to perform shift operations. The first movement of the shifter lever 100 is shown in figures 1 and 3, and corresponds to the shifter lever 100 driven in a forward-to-backward movement in a substantially first plane XZ for changing gearshift positions, P, R, N, D in an automatic mode. The second movement of the shifter lever 100, defined by arrow B, is shown in figures 2 and 4 of the drawings, and corresponds to the shifter lever 100 driven in a side-to-side movement, in a substantially second plane YZ for performing select operations, that is, for changing a mode of operation (manual or automatic in the example shown) between the above mentioned modes of operation.

As shown in the figures, the first plane XZ is defined by a longitudinal axis X of the select shaft 160 and a vertical axis Z. The second plane YZ is defined by a longitudinal axis Y of the shift shaft 150 and said vertical axis Z. The first and second planes XZ, YZ are therefore perpendicular to each other.

A sensing unit 120 is provided. The sensing unit 120 comprises a single magnetic sensor 121 and a magnet 122 arranged at one end portion of a support member 123 such that a front surface of the magnet 122 with at least a first pole and a second pole is arranged facing the magnetic sensor. The magnet 122 is in this example a diametrically polarized magnet although other types of magnets 122 can be of course used. The support member 123 can be overmoulded on the magnet.

The magnetic sensor 121 is arranged to detect a rotational movement of the magnet 122 around axis Y, that is, a rotational movement around the shift shaft 150 as the shifter lever 110 is actuated in a forward-to-backward movement, that is movement defined by arrow A, in the first plane XZ for changing gearshift positions. In this non-limiting example, a rotational displacement of the magnet 122 between two consecutive gearshift positions is from 2 to 10°.

The magnetic sensor 121 is also arranged to detect an axial displacement movement of the magnet 122 along an axis parallel to axis Y, that is, along an axis parallel to the shift shaft 150 as the shifter lever 110 that is actuated according to a side-to-side movement, that is movement defined by arrow B, in the second plane YZ for performing select operations, that is, for selecting a manual or an automatic mode of operation. The axial displacement of the magnet 122 relative to the magnetic sensor 121 defines a variation in an airgap between the magnetic sensor 121 and the magnet 122 as shown in the figures.

A driving plate 170 is provided for causing a linear axial displacement movement of the support member 123, that is, the magnet 122, along an axis parallel to axis Y, guided through the housing, as the shifter lever 110 is driven by the user according to the side-to-side movement, that is movement defined by arrow B, in the second plane YZ for selecting a manual or an automatic mode of operation. The axial displacement of the support member 123 with the magnet 122 could be guided through other parts associated with the housing, such as for example the shift shaft 150.

The driving plate 170 can be rotated around a pivot axis 175 against a torsion spring 176 as a lower end of the driving plate 170 is pushed by an actuator 115. However, the support member 123 could be provided to be displaced directly by the shifter lever 110 without using a driving plate 170. The actuator 115 is attached to the shifter lever 110 projecting outwards therefrom towards the driving plate 170. A receiving portion 177 is formed in an upper end of the driving plate 170. The receiving portion 177 has an opening defining a U-shaped portion for receiving a recess formed at one end of the support member 123 such that the support member 123 is coupled to the driving plate 170. Rotation of the driving plate 170 around pivot axis 175 causes an axial displacement of the support member 123 axially with respect to the magnetic sensor 121, parallel to the Y axis. Such U-shape in the receiving portion 177 allows the support member 123 to be displaced axially preventing it to be displaced along axis Z, since as the shifter lever 110 is rotated relative to the select shaft 160, the movement is not only linear.

The driving plate 170 thus acts as a multiplier causing the amount of axial movement of the shifter lever 110 to be different to that of the support member 123 as it is rotated according to arrow B according to the side-to-side movement thereof.

Specifically, as the shifter lever 110 is driven by the user to the right, that is clockwise movement defined by arrow B, in said second plane YZ for selecting a manual or an automatic mode of operation, the actuator 115 of the shifter lever 110 pushes the lower end of the driving plate 170 causing the driving plate 170 to be rotated in the same direction against spring 176. As a result, the support member 123 together with the magnet 122 are moved away from the magnetic sensor 121.

In the same way, as the shifter lever 110 is driven by the user to the left, that is counter clockwise movement defined by arrow B, in the second plane YZ for selecting a manual or an automatic mode of operation, spring 176 pushes the driving plate 170 also counter clockwise such that the support member 123 together with the magnet 122 are moved towards the magnetic sensor 121.

In both cases, longitudinal displacement of the support member 123 together with the magnet 122 relative to the magnetic sensor 121 is detected by the sensing unit 120 and a suitable signal is sent to a control unit that the shifter lever 110 is being actuated for selecting one mode of operation.

The width of the driving plate 170 is sized so as to accommodate rotation of the shifter lever 110, that is, to ensure that the actuator 115 of the shifter lever 110 is always capable of pushing the driving plate 170 on the lower end thereof regardless the position of the shifter lever 110 as it is rotated according to arrow A in plane XZ.

In the example shown in figures 1-2 of the drawings, a driving member 140 is provided. The driving member 140 consists of a cylindrical sector of a given extension that is in frictional contact with the outer surface of the support member 123. Other types of couplings, as gears or cams, between the driving member 140 and the support member 123 are possible. Figures 1-2 of the drawings show by way of one example two driving members 140 consists of cylindrical sectors of different extensions. In any case, the driving member 140 is attached to or is part of the shift shaft 150 and is arranged to contact the support member 123. In this way, as the shifter lever 110 is actuated by the user in a forward-to-backward movement in the first plane XZ for changing gearshift positions, the rotational movement of the shift shaft 150 according to arrow A causes a corresponding movement of the support member 123 and thus the magnet 122 around axis Y. The driving member 140 is sized according to the distance between the shift shaft 150 and the support member 123 and such that a rotation angle of the support member 123 is 2-5 times higher than a rotation angle of the shift shaft 150 and thus that of the shifter lever 110. Other ratios of the rotation angle are of course not ruled out. In this case, a rotational displacement of the magnet 122 between two consecutive gearshift positions may be from 7 to 14°.

As with the driving plate 170, the driving member 140 thus acts as a multiplier causing the amount of rotational movement of the shifter lever 110 to be different to that of the support member 123 as the shifter lever 110 is actuated in a forward-to-backward movement according to arrow A

In the example shown in figures 3 and 4 of the drawings, no driving member 140 is provided. In this case, a rotation angle of the support member 123 is equal to a rotation angle of the shift shaft 150.

A printed circuit board 130 is provided. The printed circuit board 130 is positioned in a substantially vertical position as shown in the figures. A substantially vertical position means herein a position in which the printed circuit board 130 is arranged substantially perpendicular to the support member 123. In the specific example shown, the printed circuit board 130 is also arranged substantially perpendicular to the shift shaft 150.

The magnetic sensor 121 is connected to the printed circuit board 130 such that the above mentioned rotational and axial displacement movements of the magnet 122 relative to the magnetic sensor 121 can be detected. As a result, corresponding suitable electrical signals which are fed to a control unit in order to control a vehicle transmission.

The above described structure allows two different movements of the shifter lever 110, that is, movements in first and the second planes ZX, YZ to be detected by the same magnetic sensor 121 and the same magnet 122. A simple, reliable and cost effective shifter assembly 100 is obtained.

The scope of the present invention should not be limited by particular examples, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A shifter assembly (100) for controlling a vehicle transmission, the assembly (100) comprising:
- a shifter lever (110) that is pivotally mounted to a fixed base such that the shifter lever (110) can be moved according to a first movement and according to a second, different movement, wherein the first movement corresponds to a rotational movement; and
- a single sensing unit (120) comprising at least one magnetic sensor (121) arranged to detect both rotational and axial displacement movements of a magnet (122), so as to identify whether the first or second movement is being performed by the shifter lever (110),
wherein the magnet (122) is arranged to perform a rotational movement relative to the single sensing unit (120) according to one of the first or second movements of the shifter lever (110) and an axial displacement movement relative to the single sensing unit (120) according to the other of the first or second movements of the shifter lever (110);
and wherein the displacement movement of the magnet (122) relative to the magnetic sensor (121) is performed along a longitudinal axis thereof,
wherein the shifter assembly (100) further comprises a support member (123) to carry the magnet at one end portion thereof with a front surface of the magnet (122) with at least a first pole and a second pole, the front surface of the magnet (122) facing the single sensing unit (120),
**characterized in that** the shifter assembly further comprises a driving member (140) that is attached or is part of a shift rod (150) that in turn is attached to or is formed integral with the shifter lever (110), wherein the driving member (140) is coupled to the support member (123) through one of a cylindrical sector, a gear, and a cam engaging an outer surface of the support member (123) to drive the magnet (122) in rotation as the shifter lever (110) is actuated according to the first movement.

2. The shifter assembly (100) of any of the preceding claims, wherein a ratio of a rotation angle of the magnet (122) to a rotation angle of the shifter lever (110) ranges from 2° to 5°, and wherein the rotational displacement of the magnet (122) between said gearshift positions ranges from 7° to 14°.

3. The shifter assembly (100) of any of the preceding claims, wherein the at least one magnetic sensor (121) of the single sensing unit (120) is arranged on a printed circuit board (130) operative to detect both the rotational and axial displacement movements of the magnet (122) and to generate corresponding electrical signals to control a vehicle transmission.

4. The shifter assembly (100) of claim 3, wherein the printed circuit board (130) is positioned in a vertical position.

5. The shifter assembly (100) of any of the preceding claims, wherein the first movement of the shifter lever (110) is performed in a first plane (XZ) and the second movement of the shifter lever (110) is performed in a second, different plane (YZ).

6. The shifter assembly (100) of any of the preceding claims, wherein it further comprises a driving plate (170) for causing an axial displacement of the magnet (122) as the shifter lever (110) is actuated.

7. The shifter assembly (100) of claim 6, wherein the driving plate (170) is formed integral with the shifter lever (110).

8. The shifter assembly (100) of claim 6 or 7, wherein the driving plate (170) is arranged to be rotated around a pivot axis (175) against a torsion spring (176) as a lower end of the driving plate (170) is pushed by an actuator (115).

9. The shifter assembly (100) of any of the preceding claims, wherein one or the first and second movements is to perform shift operations involving changing gearshift positions for controlling a vehicle transmission in at least one mode of operation, and the other of the first and second movements is to perform select operations to change between at least two different modes of operation.

## Patentansprüche

1. Eine Schaltanordnung (100) zum Steuern eines Fahrzeuggetriebes, wobei die Anordnung (100) Folgendes umfasst:
- einen Schalthebel (110), der schwenkbar an einer festen Basis montiert ist, so dass der Schalthebel (110) gemäß einer ersten Bewegung und gemäß einer zweiten, verschiedenen Bewegung bewegt werden kann, wobei die erste Bewegung einer Drehbewegung entspricht; und
- eine einzelne Erfassungseinheit (120) umfassend mindestens einen magnetischen Sensor (121), der angeordnet ist, um sowohl rotationale als auch axiale Verschiebungsbewegungen eines Magneten (122) zu erfassen, um zu identifizieren, ob die erste oder zweite Bewegung durch den Schalthebel (110) ausgeführt wird,
wobei der Magnet (122) angeordnet ist, um eine Drehbewegung relativ zu der einzelnen Erfassungseinheit (120) gemäß einer der ersten oder zweiten Bewegung des Schalthebels (110) auszuführen und eine axiale Verschiebungsbewegung relativ zu der einzelnen Erfassungseinheit (120) gemäß der anderen der ersten oder zweiten Bewegungen des Schalthebels (110) auszuführen;
und wobei die Verschiebungsbewegung des Magnets (122) relativ zum magnetischen Sensor (121) entlang einer Längsachse davon ausgeführt wird,
wobei die Schaltanordnung (100) weiterhin ein Stützelement (123) umfasst, um das Magnet an einem Endteil davon mit einer vorderen Fläche des Magnets (122) mit mindestens einem ersten Pol und einem zweiten Pol zu tragen, wobei die vordere Fläche des Magnets (122) der einzelnen Erfassungseinheit (120) zugewandt ist,
**dadurch gekennzeichnet, dass** die Schaltanordnung weiterhin ein Antriebselement (140) umfasst, das an einer Schaltstange (150) angebracht oder Teil davon ist, welche wiederum an dem Schalthebel (110) angebracht oder einstückig mit diesem ausgebildet ist, wobei das Antriebselement (140) an dem Stützelement (123) durch eines der folgenden gekoppelt ist: einen zylindrischen Sektor, ein Getriebe und eine Kurvenscheibe, die in Eingriff mit einer äußeren Fläche des Stützelements (123) kommt, um das Magnet (122) in Drehung zu versetzen, wenn der Schalthebel (110) gemäß der ersten Bewegung betätigt wird.

2. Die Schaltanordnung (100) von einem der vorhergehenden Ansprüche, wobei ein Verhältnis eines Drehwinkels des Magneten (122) zu einem Drehwinkel des Schalthebels (110) im Bereich von 2° bis 5° liegt, und wobei die Drehverschiebung des Magneten (122 ) zwischen den Schaltpositionen von 7° bis 14° reicht.

3. Die Schaltanordnung (100) von einem der vorhergehenden Ansprüche, wobei der mindestens eine Magnetsensor (121) der einzelnen Erfassungseinheit (120) auf einer Leiterplatte (130) angeordnet ist, die betreibbar ist, um sowohl die rotationale als auch die axiale Verschiebungsbewegungen des Magneten (122) zu erfassen und entsprechende elektrische Signale zur Steuerung eines Fahrzeuggetriebes zu erzeugen.

4. Die Schaltanordnung (100) des Anspruchs 3, wobei die Leiterplatte (130) in einer vertikalen Position positioniert ist.

5. Die Schaltanordnung (100) von einem der vorhergehenden Ansprüche, wobei die erste Bewegung des Schalthebels (110) in einer ersten Ebene (XZ) ausgeführt wird und die zweite Bewegung des Schalthebels (110) in einer zweiten, verschiedenen Ebene (YZ) ausgeführt wird.

6. Die Schaltanordnung (100) von einem der vorhergehenden Ansprüche, wobei sie weiterhin eine Antriebsplatte (170) umfasst, um eine axiale Verschiebung des Magneten (122) zu bewirken, wenn der Schalthebel (110) betätigt wird.

7. Die Schaltanordnung (100) des Anspruchs 6, wobei die Antriebsplatte (170) einstückig mit dem Schalthebel (110) gebildet ist.

8. Die Schaltanordnung (100) des Anspruchs 6 oder 7, wobei die Antriebsplatte (170) angeordnet ist, um eine Drehachse (175) gegen eine Drehfeder (176) gedreht zu werden, als ein unteres Ende der Antriebsplatte (170) durch einen Aktor (115) gedrückt wird.

9. Die Schaltanordnung (100) von einem der vorhergehenden Ansprüche, wobei eine oder die erste und die zweite Bewegung in die Durchführung von Schaltoperationen besteht bzw. bestehen, welche das Ändern von Schaltpositionen zur Steuerung von einem Fahrzeuggetriebe in mindestens einem Betriebsmodus umfasst, und die andere der ersten und zweiten Bewegung in die Durchführung von Wahloperationen zur Änderung zwischen mindestens zwei verschiedenen Betriebsmodi besteht.

## Revendications

1. Un ensemble de changement de vitesse (100) pour commander une transmission de véhicule, l'ensemble (100) comprenant :
- un levier de changement de vitesse (110) qui est monté de manière pivotante sur une base fixe de sorte que le levier de changement de vitesse (110) peut être déplacé selon un premier mouvement et selon un second mouvement différent, dans lequel le premier mouvement correspond à un mouvement de rotation ; et
- une seule unité de détection (120) comprenant au moins un capteur magnétique (121) agencé pour détecter à la fois des mouvements de déplacement rotatif et axial d'un aimant (122), de manière à identifier si le premier ou le second mouvement est effectué par le levier de changement de vitesse (110),
dans lequel l'aimant (122) est agencé pour effectuer un mouvement de rotation relatif à la seule unité de détection (120) selon l'un du premier ou second mouvement du levier de changement de vitesse (110) et un mouvement de déplacement axial relatif à la seule unité de détection (120) selon l'autre du premier ou second mouvement du levier de changement de vitesse (110) ;
et dans lequel le mouvement de déplacement de l'aimant (122) par rapport au capteur magnétique (121) est effectué le long d'un axe longitudinal de celui-ci,
dans lequel l'ensemble de changement de vitesse (100) comprend en outre un élément de support (123) pour porter l'aimant dans une partie d'extrémité de celui-ci avec une surface avant de l'aimant (122) avec au moins un premier pôle et un second pôle, la surface avant de l'aimant (122) étant située face à la seule unité de détection (120),
**caractérisé en ce que** l'ensemble de changement de vitesse comprend en outre un élément d'entraînement (140) qui est attaché à ou qui fait partie d'une tige de changement de vitesse (150) qui, à son tour, est attachée à ou fait partie intégrale du levier de changement de vitesse (110), dans lequel l'élément d'entraînement (140) est couplé à l'élément de support (123) à travers l'un parmi un secteur cylindrique, un engrenage, et une came venant en prise avec une surface extérieure de l'élément de support (123) pour entraîner l'aimant (122) en rotation lorsque le levier de changement de vitesse (110) est actionné selon le premier mouvement.

2. L'ensemble de changement de vitesse (100) de l'une quelconque des revendications précédentes, dans lequel un rapport d'un angle de rotation de l'aimant (122) à un angle de rotation du levier de changement de vitesse (110) va de 2° à 5°, et dans lequel le déplacement en rotation de l'aimant (122) entre lesdites positions de changement de vitesse va de 7° à 14°.

3. L'ensemble de changement de vitesse (100) de l'une quelconque des revendications précédentes, dans lequel l'au moins un capteur magnétique (121) de la seule unité de détection (120) est agencé sur une carte de circuit imprimé (130) fonctionnant pour détecter à la fois les mouvements de déplacement rotatif et axial de l'aimant (122) et pour générer des signaux électriques correspondantes pour commander une transmission de véhicule.

4. L'ensemble de changement de vitesse (100) de la revendication 3, dans lequel la carte de circuit imprimé (130) est positionnée dans une position verticale.

5. L'ensemble de changement de vitesse (100) de l'une quelconque des revendications précédentes, dans lequel le premier mouvement du levier de changement de vitesse (110) est effectué dans un premier plan (XZ) et le second mouvement du levier de changement de vitesse (110) est effectué dans un second plan différent (YZ).

6. L'ensemble de changement de vitesse (100) de l'une quelconque des revendications précédentes, dans lequel il comprend en outre une plaque d'entraînement (170) pour provoquer un déplacement axial de l'aimant (122) lorsque le levier de changement de vitesse (110) est actionné.

7. L'ensemble de changement de vitesse (100) de la revendication 6, dans lequel la plaque d'entraînement (170) est formée de manière intégrale avec le levier de changement de vitesse (110).

8. L'ensemble de changement de vitesse (100) de la revendication 6 ou 7, dans lequel la plaque d'entraînement (170) est agencée de manière à être pivotée autour d'un axe de rotation (175) contre un ressort à torsion (176) lorsqu'une extrémité inférieure de la plaque d'entraînement (170) est poussée par l'actionneur (115).

9. L'ensemble de changement de vitesse (100) de l'une quelconque des revendications précédentes, dans lequel l'un ou le premier et le second mouvement consiste en effectuer des opérations de changement de vitesse comportant le changement de positions de vitesse pour commander la transmission d'un véhicule dans au moins un mode de fonctionnement, et l'autre des mouvements premier et second consiste en effectuer des opérations de sélection pour changer entre au moins deux modes différents de fonctionnement.
